# EUROPEAN PATENT SPECIFICATION

(11) **EP 3 538 819 B1**
(45) Date of publication and mention of the grant of the patent: **23.08.2023**
(21) Application number: 17749350.9
(22) Date of filing: 20.06.2017
(51) Int. Cl.: F24H 3/00, F28F 21/04, F28D 21/00, F23L 15/02, F23M 20/00, F24D 5/02

(54) **CERAMIC CATALYTIC CONDENSER FOR AIR-HEATING**
KERAMISCHER KATALYTISCHER KONDENSATOR ZUR LUFTERWÄRMUNG
CONDENSEUR CATALYTIQUE EN CÉRAMIQUE POUR CHAUFFAGE D'AIR

(30) Priority: 21.06.2016 AL 1622516
(43) Date of publication of application: 18.09.2019
(73) Proprietor: Ndoji, Valentin, Mirditë 4607 (AL)
(72) Inventor: Ndoji, Valentin, Mirditë 4607 (AL)
(74) Representative: Dodbiba, Eno
(86) International application number: PCT/AL2017/000001
(87) International publication number: WO 2017/219051

(56) References cited:
- EP-A1- 0 941 759
- EP-A1- 1 653 539
- DE-A1-102008 055 852
- GB-A- 2 146 757
- US-A- 4 711 298

## Description

On the genesis of the air-heating systems, heads the fire method using low-costing timber, which releases heat through thermal radiation. This way of heating the air continues even nowadays. We can see the smoke moving throughout the chimneys of the fireplaces in our own houses and call it the very first invention for air-heating.

Later the stove was invented. In this case we do not get the heat directly from the fire, which, itself, may come as a result of raw-wood, processed-wood such as pellet, or even from the hydrocarbon's burning. Indeed, the fire heats the metal from which the stove itself is made of, and then we get the warmness from the thermal energy this metal emits. Despite all the improvements made over time for different types of stoves among which stand the wood stoves, hydrocarbon stoves and pellet stoves etc , the heating method remains the same.

Another method for air-heating is what we call a boiler heating system, which starts with the water-heating and then is uses the warmed water to heat the ambient. The heating of water can be initially provided from wood, pellet or hydrocarbons.

While analysing all of these methods, which are inventions itself, we come to the conclusion that there is room for improvements, since it results that they are often dangerous for our health and welfare. There are cases when we face air burns, cases when particular metals emit various oxides when changing their temperature. It also happens that some polluting agents can be deposited on the metal's surface and afterwards return to the air in the form of allergic agents. On the surface of these metals, and this is especially what often happens with the water boilers, we face condensation which heads to humidity. Another problem these inventions create is the large amount of carbon dioxide they release and, furthermore, despite all these problems, it also costs us a lot to keep them at work.

*At this point I represent you with a new way of warming the air, which is called:*

### Ceramic Catalytic Condenser

The Ceramic Catalytic Condenser by placing over a fire hearth , will heat the air with lower cost and with lower level of pollution , since it can absorb all the heat released from the fire because of its structure and composition. This Ceramic Catalytic Condenser can be used to heat the air of different places where we live or work but also it can be used even in industry because it is very efficient and eco-friendly.

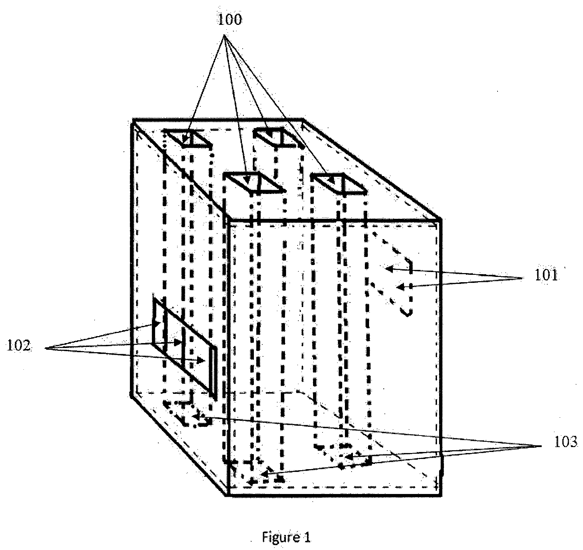

This condenser's structure has the shape of a closed chamber (figure 1), in which we vertically fix within it some ceramic cylinders, equidistant from each other at a distance equal to their inner dimensions, dividing and combining two proportional volumes. In the volume within the ceramic cylinders passes the fire and the heat is imparted between the floor and the ceiling The outer surface of ceramic cylinders is interrupted by the floor and the ceiling, creating a separated volume, through which, helped by the two windows placed in two vertical sidewalls facing each other , passes the clean air, which take the warm of the cylinders by rushing through their outer surface.

The cylinders have such a shape and alignment that allows the air to percolate through their outer surface and stand as long as possible into the ceramic condenser. The whole structure is produced with the aid of the foundry process, with immediate pouring ,so that the two volumes can be hermetically divided and the heat can be conveyed only through the ceramic.

The catalytic condenser consists entirely of one kind of ceramic which as some attributes. Firstly, it is resistant to temperature and its changes. Secondly it quickly absorbs and saves the temperature released from the fire hearth. What is the most important about this kind of ceramic , is the fact of being a completely natural material, which means that the air does not get polluted from oxides or other polluting agents during the immediate change of temperature or while moving through the cylinders. From the antiquity up to nowadays, the ceramic has been used, after being processed with a simple method which mainly consists in use of water. This ceramic has been used to build the floor of classic baking furnace used for cooking and baking food. These floors had a lifespan up to 20 years.

Ways of using this ceramic condenser are numerous; we can use it for direct heating of residential ambient, and also in various industries that require hot air to carry out different industrial processes.

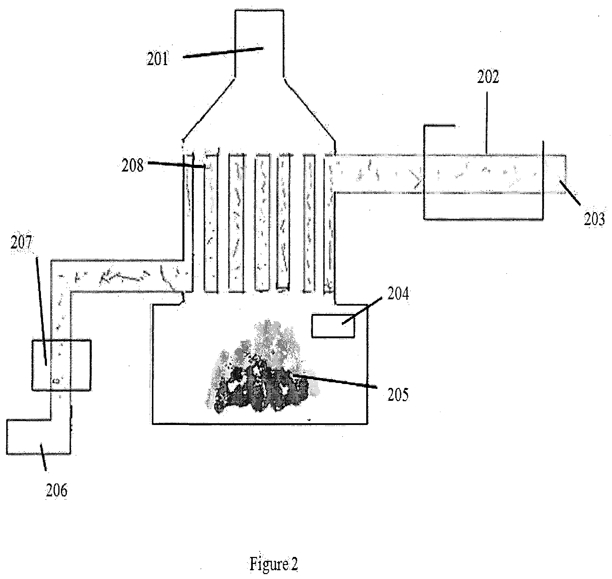

Regarding to heating, described in figure 2, we possess a heating system where the ceramic condenser, with the help of technology, makes the system very ecological and economical. By using bio-filter filtration, fresh air is used and in the condenser there are no polluting agents. By monitoring the air so that it will not pass through a temperature that is higher than 60-80 degrees Celsius, and we can prevent the air-burn. To achieve this, because the condenser has the ability to increase the temperature at a temperature several times higher than the temperature of the fire itself, we lower or stop feeding of the fire. This can be implemented only to controllable forms of fire, such as pellet or gas fire, that provides us savings and cost reductions which heads up to 70% compared to current heating systems. By reducing the quantity of the elements that fuel the fire , we will receive the benefit of lower gases released in the air ,referring both to quantity and the temperature which is comparable to the temperature of fresh air. This in other words can be translated not only as a reduction of the atmosphere's pollution, but also as a direct reduction of the global warming. So, we are speaking of an ecological system in two directions; the one of the clean warm air due to filtration, use of a completely biologic surface, moisture and temperature monitoring, and the other which consist in avoidance of releasing in nature many gases with a high temperature.

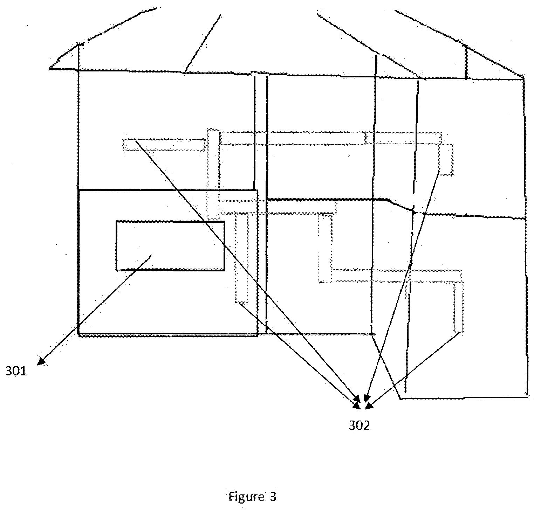

This system can be used, in parallel and at a low cost for heating more than one ambient. This can be achieve through the distribution described in figure 3. This method makes it possible to heat the entire house or even larges spaces such as groups of apartments and other public spaces such as: schools, hospitals, shopping malls etc. Also it can be used for air-heating of open spaces such as the open paths of restaurants and bars which are currently being heated with different alternatives that often results to be harmful and expensive.

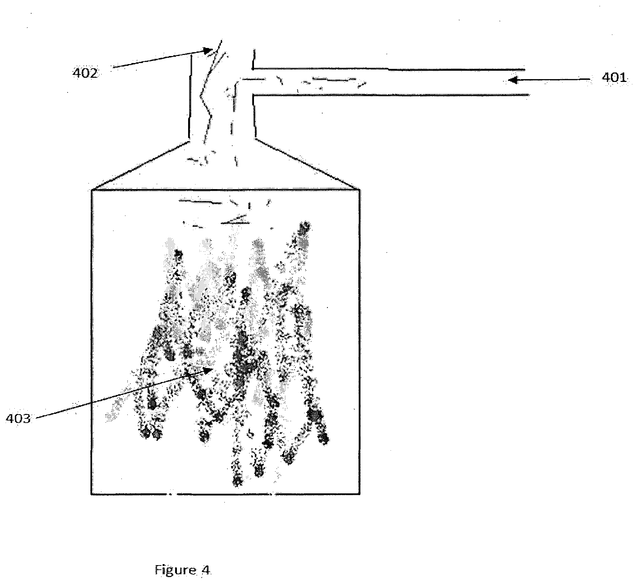

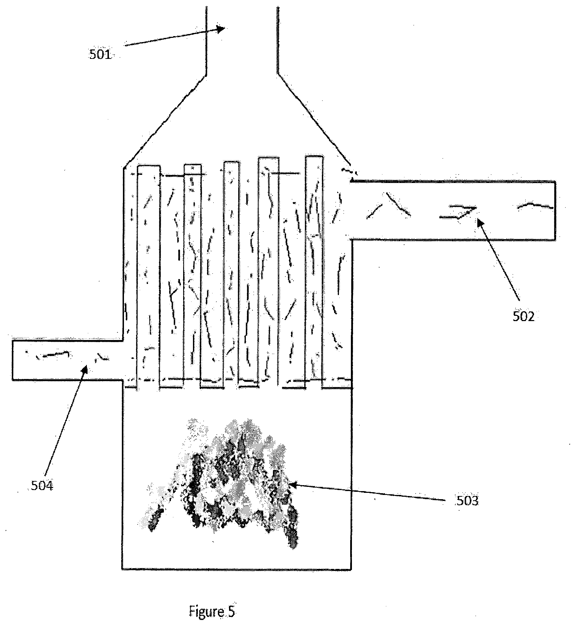

Regarding the use of ceramic condenser in industry, there are many possibilities. One of them can be the process of producing the pellet. In contrast to the actual air-heating method , described in figure 4, the air used to dry the grated wood, from which pellet is produced, is taken directly from the fire. The air comes simultaneously with the oxides taken from the raw material and get attached to the pellet. Later ,when the pellet burns, these risky polluting agents are rereleased in nature. In case of using the ceramic condenser, described in figure 5, the warm air that we use is clean and gives us as a result, a cleaner and more ecological pellet. In case of the actual method of producing the pellet the cost of air heating is up to 30% of the whole process. But in case of using the ceramic condenser the cost will be reduced up to 70%.

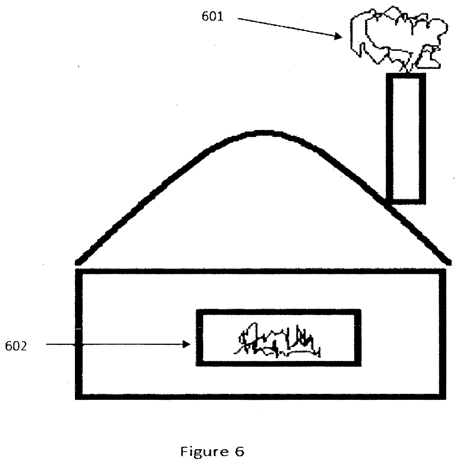

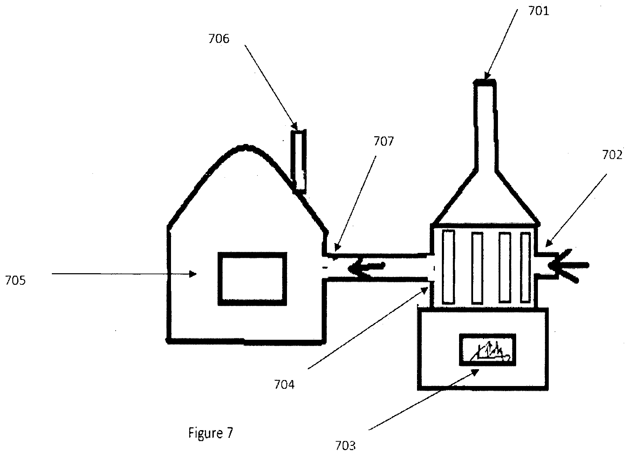

Another possibility of using the ceramic condenser , is the cooking oven, where, instead of burning fire within them in order to heat them, and then use this heat to cook , as described in figure 6, we can use the warmed air produced by the ceramic condenser system as described in figure 7. Those baking ovens can be adapted to baking in series(more than one at a time). Such thing can be provided by replacing the fire with warm and clean air (received from the ceramic condenser) , which is absolutely cheaper and saves a lot of time as well.

These were only two examples among the numerous cases where heated air received from the ceramic condenser can be used, in replacement of other heat sources.In any other possible use of ceramic condenser , the main principle is the same: warm and clean air, low cost method , fewer amount of gases released in the air with temparature compared to temperature of the fresh air, and of course less air pollution.

### LIST OF REFERENCE NUMBERS FOR THE ELEMENTS IN THE DRAWINGS IN NUMERICAL ORDER

100 Smoke exit
101 Air exit
102 Air entrance
103 Fire entrance
201 Smoke exit
202 Moisture Regulator Sensor
203 Warm air exit
204 Fire-food mechanism
205 Fire Hearth
206 Electrom
207 Bio-filter
208 The ceramic condenser
301 Heating mechanism
302 Temperature sensor and regulator
401 Burned air
402 Smoke
403 The fire- place
501 Smoke exit
502 Clean air exit
503 The fire-place
504 Clean air entrance
601 Smoke exit
602 The fire-place
701 Smoke
702 Clean air
703 The fire place
704 The ceramic condenser
705 Warm furnace
706 Clean air
707 Warm and clean air

## Claims

1. A ceramic catalytic condenser heat exchanger for heat exchange between air to be heated and fumes comprising a chamber with a top wall, a bottom wall, and four vertical side walls, a plurality of cylinders located within the chamber and being vertically fixed in the top wall and the bottom wall equidistant from each other at a distance equal to their inner dimensions such that a first volume is defined within the chamber by the top wall, the bottom wall, the four vertical side walls, and the outer surfaces of the plurality of cylinders for air to be heated, and such that a second volume is defined by the inner surfaces of the plurality of cylinders for fumes to pass, wherein the chamber further comprises an inlet window and an outlet window placed in two of the vertical side walls facing each other, and
wherein the ceramic catalytic condenser heat exchanger is made as a single ceramic body by means of a foundry process where the first and second volumes through which, in use, the fumes and the air pass, are occupied by waxy forms, which, after the liquid ceramic has been poured and dried out, are removed from the heat exchanger by melting and thereby define the first and second volumes, such that the heat exchanger consists entirely of one kind of ceramic and comprises the first and second volumes hermetically separated from each other by said one kind of ceramic, where said one kind of ceramic is a completely natural material, which means that the air, while passing through the heat exchanger and being heated, does not get polluted from oxides or other polluting agents thereof, and wherein said one kind of ceramic is capable for rapid absorption of high temperatures from the fumes and for keeping the high temperatures for a long time.

2. An air heating system comprising a ceramic catalytic condenser heat exchanger according to claim 1, an air inlet duct upstream of the inlet window and an air outlet duct downstream of the outlet window for air to be heated to flow through, a bio-filter for filtering the air to be heated, and means for temperature and moisture monitoring, wherein the bio-filter is arranged in the inlet duct and the means for temperature and moisture monitoring is arranged in the outlet duct.

3. Use of the air heating system according to claim 2 for air heating of spaces, such as apartments, schools, hospitals, shopping malls.

4. Use of the ceramic catalytic condenser heat exchanger according to claim 1 for drying of grated wood from which pellets can be produced.

5. Use of the ceramic catalytic condenser heat exchanger according to claim 1 for cooking or baking ovens.

## Patentansprüche

1. Einen keramischen katalytischen Kondensator (Fig. 2) zum Wärmeaustausch zwischen zu erhitzenden Luft und Rauchgasen, umfassend eine Kammer mit einer oberen Wand, einer unteren Wand und vier vertikalen Seitenwänden, eine Vielzahl von Zylindern, die innerhalb der Kammer angeordnet sind und vertikal in der oberen Wand und der unteren Wand in gleichem Abstand zueinander in einem Abstand angeordnet sind, der gleich ihren inneren Abmessungen ist, so dass ein erstes Volumen innerhalb der Kammer durch die obere Wand, die untere Wand, die vier vertikalen Seitenwände und die äusseren Oberflächen der Vielzahl von Zylindern für zu erwärmende Luft definiert ist, und wobei die Kammer ferner ein Einlassfenster und ein Auslassfenster umfasst, die in zwei der vertikalen Seitenwände angeordnet sind, die einander zugewandt sind, und wobei der keramische katalytische Kondensator-Wärmetauscher als ein einzelner Keramikkörper mittels eines Giessereiprozesses hergestellt ist, wo die durch die im Gebrauch die Dämpfe und der Luftdurchgang durch wachsartige Formen besetzt sind, die nach dem Giessen und Trocknen der flüssigen Keramik aus dem Wärmetauscher durch Schmelzen entfernt werden und dadurch das erste und das zweite Volumen definieren, so dass der Wärmetauscher vollständig aus einer Art von Keramik besteht und das erste und das zweite Volumen hermetisch voneinander durch die eine Art von Keramik getrennt ist, wobei die eine Art von Keramik ein vollständig natürliches Material ist, was bedeutet, dass die Luft, während sie durch den Wärmetauscher strömt und erwärmt wird, nicht von Oxiden oder anderen verschmutzenden Mitteln davon verunreinigt wird, und wobei die eine Art von Keramik für eine schnelle Absorption von hohen Temperaturen aus den Dämpfen und zum Halten der hohen Temperaturen für eine lange Zeit in der Lage ist.

2. Ein Luftheizsystem, umfassend einen keramischen katalytischen Kondensatorwärmetauscher nach Anspruch 1, einen Lufteinlasskanal stromaufwärts des Einlassfensters und einen Luftauslasskanal stromabwärts des Auslassfensters für zu erwärmende Luft, einen Biofilter zum Filtern der zu erwärmenden Luft und Mittel zur Temperatur-und Feuchtigkeitsüberwachung, wobei der Biofilter in dem Einlasskanal angeordnet ist und die Mittel zur Temperatur-und Feuchtigkeitsüberwachung in dem Auslasskanal angeordnet sind.

3. Verwendung des Luftheizsystems nach Anspruch 2, zur Luftheizung von Räumen, wie Wohnungen, Schulen, Krankenhäusern, Einkaufsmalls.

4. Verwendung des keramischen katalytischen Kondensator-Wärmetauschers nach Anspruch 1, zum Trocknen von Granatholz, aus dem Pellets hergestellt werden können.

5. Verwendung des keramischen katalytischen Kondensatorwärmetauschers nach Anspruch 1, für Koch-oder Backöfen.

## Revendications

1. Un condenseur catalytique céramique (figure 2) pour l'échange de chaleur entre l'air à chauffer et les fumées comprenant une chambre avec une paroi supérieure, une paroi inférieure et quatre parois latérales verticales, une pluralité de cylindres situés à l'intérieur de la chambre et fixés verticalement dans la paroi supérieure et la paroi inférieure à équidistance les uns des autres à une distance égale à leurs dimensions internes de telle sorte qu'un premier volume est défini à l'intérieur de la chambre par la paroi supérieure, la paroi inférieure, les quatre parois latérales verticales et les surfaces externes de la pluralité de cylindres pour l'air à chauffer, et de telle sorte qu'un second volume est défini par les surfaces internes de la pluralité de cylindres pour les fumées à passer, la chambre comprenant en outre une fenêtre d'entrée et une fenêtre de sortie placées dans deux des parois latérales verticales se faisant face, et l'échangeur de chaleur à condenseur catalytique céramique étant réalisé sous la forme d'un corps céramique unique au moyen d'un processus de fonderie où le lors de l'utilisation, les fumées et le passage d'air sont occupés par des formes cireuses, qui, après que la céramique liquide a été versée et séchée, sont retirées de l'échangeur de chaleur par fusion et définissent ainsi les premier et second volumes, de telle sorte que l'échangeur de chaleur est entièrement constitué d'un type de céramique et comprend les premier et second volumes séparés hermétiquement l'un de l'autre par ledit type de céramique, ledit type de céramique étant un matériau complètement naturel, ce qui signifie que l'air, tout en passant à travers l'échangeur de chaleur et étant chauffé, ne se pollue pas des oxydes ou d'autres agents polluants de ceux-ci, et ledit type de céramique étant apte à une absorption rapide de températures élevées à partir des fumées et à maintenir les températures élevées pendant une longue période.

2. Un système de chauffage d'air comprenant un échangeur de chaleur à condenseur catalytique en céramique selon la revendication 1, un conduit d'entrée d'air en amont de la fenêtre d'entrée et un conduit de sortie d'air en aval de la fenêtre de sortie pour l'air à chauffer pour s'écouler à travers, un biofiltre pour filtrer l'air à chauffer, et des moyens de surveillance de température et d'humidité, le bio-filtre étant disposé dans le conduit d'entrée et les moyens de surveillance de température et d'humidité étant agencés dans le conduit de sortie.

3. Utilisation du système de chauffage d'air selon la revendication 2 pour le chauffage à l'air d'espaces, tels que des appartements, des écoles, des hôpitaux, des centres commerciaux.

4. Utilisation de l'échangeur de chaleur à condenseur catalytique en céramique selon la revendication 1 pour le séchage de bois râpé à partir duquel des pastilles peuvent être produites.

5. Utilisation de l'échangeur de chaleur à condenseur catalytique en céramique selon la revendication 1 pour la cuisson ou la fours de cuisson.
